(19) Europäisches Patentamt / European Patent Office / Office européen des brevets

(11) **EP 3 822 045 B1**

(12) **EUROPEAN PATENT SPECIFICATION**

(45) Date of publication and mention of the grant of the patent:
**30.04.2025 Bulletin 2025/18**

(21) Application number: **19833125.8**

(22) Date of filing: **11.03.2019**

(51) International Patent Classification (IPC):
**B25J 9/10** *(2006.01)*  **B25J 9/06** *(2006.01)*
**B25J 9/16** *(2006.01)*  **B25J 5/00** *(2006.01)*

(52) Cooperative Patent Classification (CPC):
**B25J 5/007; B25J 9/162; B25J 9/1676;**
**G05D 1/0246; G05D 1/0891;** G05B 2219/37376;
G05B 2219/39182

(86) International application number:
**PCT/JP2019/009707**

(87) International publication number:
**WO 2020/012710 (16.01.2020 Gazette 2020/03)**

(54) **MANIPULATOR CONTROL DEVICE, MANIPULATOR CONTROL METHOD, AND MANIPULATOR CONTROL PROGRAM**

MANIPULATORSTEUERVORRICHTUNG, MANIPULATORSTEUERVERFAHREN UND MANIPULATORSTEUERPROGRAMM

DISPOSITIF DE COMMANDE DE MANIPULATEUR, PROCÉDÉ DE COMMANDE DE MANIPULATEUR ET PROGRAMME DE COMMANDE DE MANIPULATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2018 JP 2018133438**

(43) Date of publication of application:
**19.05.2021 Bulletin 2021/20**

(73) Proprietor: **OMRON Corporation**
**Shiokoji-dori, Shimogyo-ku,**
**Kyoto-shi**
**Kyoto 600-8530 (JP)**

(72) Inventor: **AOKI, Go**
**Kyoto 619-0283 (JP)**

(74) Representative: **Horn Kleimann Waitzhofer**
**Schmid-Dreyer**
**Patent- und Rechtsanwälte PartG mbB**
**Theresienhöhe 12**
**80339 München (DE)**

(56) References cited:
JP-A- 2018 020 423   JP-A- H09 240 521
JP-A- S60 143 860   US-A1- 2015 113 820
US-A1- 2015 359 691   US-A1- 2016 059 411

EP 3 822 045 B1

**Description**

FIELD

The present invention relates to a manipulator controller, a manipulator control method, and a manipulator control program.

BACKGROUND

Placing products on display shelves in convenience stores or other places may be automated using a movable manipulator for picking and placing products. The movable manipulator may include a movable robot and a manipulator installed on the robot. When the movable robot is on a sloping floor or has run on a low step, the movable manipulator may tilt. When the manipulator is moved to a target position without being controlled to reflect the tilt, the manipulator may reach a different target position due to the tilt, thus failing to perform a correct operation. When, for example, an obstacle, such as a display shelf, remains at a predetermined position and the manipulator is operated to a target position without being controlled to reflect the tilt, the manipulator may perform erroneous operations such as colliding with the display shelf.

A known technique measures the tilt angle of a movable robot that operates while measuring the surrounding environment using a two-dimensional (2D) laser range finder during operation, and uses the measured tilt angle of the movable robot to generate a map and to estimate the position and the posture of the movable robot (refer to, for example, JP 2018-5709 A).

Another known technique measures the tilt angle of a movable robot, and controls a base included in the movable robot to have a reduced tilt angle and horizontally place a gripper mounted on the base (refer to, for example, JP 2013-101593 A).

CITATION LIST

PATENT LITERATURE

US 2015 / 113 820 A1 discloses an arm type three-dimensional measuring machine including: a multi-jointed arm mechanism comprising a probe in a distal end; a processing part for computing a position of said probe; and an inclinometer configured to detect an inclination amount of a base part from a vertical direction in the base part for supporting the multi-jointed arm mechanism, wherein the processing part computes a position of the probe using the base part as a criterion and corrects the position of the probe using the base part as the criterion in a time-series manner based on an output from the inclinometer.

US 2016 / 059 411 A1 discloses an apparatus for manipulating articles in which a multiaxial industrial robot is arranged on a travel unit and the industrial robot and the travel unit can be supplied with electrical energy via an energy storage unit. The travel unit has a control unit and at least three wheels having at least one drive unit, wherein the control unit is configured to rotate at least one of the wheels by the drive unit about an axis of rotation standing perpendicular on a symmetrical axis of rotation of the wheel and to rotate it about the symmetrical axis of rotation by the respective drive unit so that the apparatus is travelable in any directions by the travel unit. In addition, area monitoring sensors are arranged at at least two sides of the travel unit.

US 2015 / 035 969 A1 discloses a movement assistance robot including a robot arm unit that is disposed in a base traveling using drive wheels driven by a drive source, that includes multiple arms which are mutually and relatively movable by a drive unit, and that is configured to be transformable into multiple form types respectively coping with multiple movement postures (standing-upright walking assistance mode, hand support walking assistance mode, elbow support walking assistance mode, standing-upright riding movement mode, and seat riding movement mode) of a care receiver, a holding unit that is disposed in a distal end portion of the robot arm unit so as to support a care receiver, a selective operation unit that selects one form type from the multiple form types, and a transformation control unit that drives the drive unit and transforms the robot arm unit into a form type selected by the selective operation unit.

SUMMARY

TECHNICAL PROBLEM

The technique described in Patent Literature 1 uses the measured tilt angle of the movable robot to generate a map and estimate the position and the posture of a movable object rather than to correct the operation of a manipulator in accordance with the tilt angle. The technique is thus not easily applicable to a machine for picking and placing products.

The technique described in Patent Literature 2 uses a large and complex mechanism to maintain the base to be horizontal, and thus increases the size of the machine and the cost.

In response to the above issue, one or more aspects of the present invention are directed to a manipulator controller, a manipulator control method, and a manipulator control program for reducing operational errors when a base receiving a manipulator tilts relative to a reference surface.

SOLUTION TO PROBLEM

A manipulator controller according to an aspect of the present invention comprises the features of claim 1.

The control unit may output a notification in response to the tilt angle equal to or greater than a predetermined value.

A manipulator control method according to another aspect of the present invention is implementable by a computer. The method comprises the features of claim 3.

A manipulator control program according to still another aspect of the present invention comprises the features of claim 4.

ADVANTAGEOUS EFFECTS

The aspects of the present invention may reduce operational errors when a base receiving a manipulator tilts relative to a reference surface.

BRIEF DESCRIPTION OF THE DRAWINGS

Fig. 1 is a schematic diagram of a pick and place machine.

Fig. 2 is a perspective view of an example vertical articulated robot.

Fig. 3 is a diagram of a manipulator controller showing its hardware configuration.

Fig. 4 is a functional block diagram of the manipulator controller.

Fig. 5 is a diagram describing a pitch tilt angle.

Fig. 6 is a diagram describing a roll tilt angle.

Fig. 7 is a diagram describing a pitch axis and a roll axis.

Fig. 8 is a flowchart showing a manipulator control process.

Fig. 9 is a diagram describing corrections of a target position and an obstacle position.

Fig. 10 is a diagram describing corrections of a target position and an obstacle position.

DETAILED DESCRIPTION

Embodiments of the present invention will now be described with reference to the drawings. The same or equivalent components and parts throughout the drawings are given the same reference numerals. The drawings may be exaggerated for ease of explanation, and may not be drawn to scale relative to the actual components.

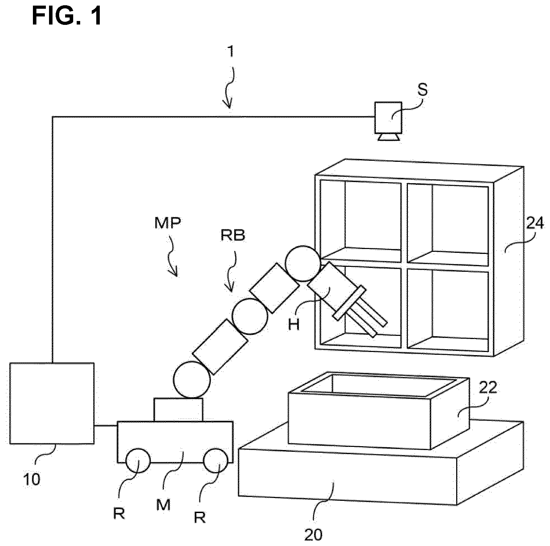

Fig. 1 is a diagram of a pick and place machine 1 according to the present embodiment showing its configuration. As shown in Fig. 1, the pick and place machine 1 includes a movable manipulator MP, an image sensor S, and a manipulator controller 10.

The movable manipulator MP includes a movable unit M as an example base and a robot RB as an example manipulator installed on the movable unit M. The movable unit M includes four wheels R driven to rotate by a motor (not shown) and moves across a floor in response to instructions from the manipulator controller 10.

The robot RB holds a workpiece (not shown) contained in a box 22 placed on a stand 20, transports the workpiece to a shelf 24, and then places the workpiece in the shelf 24.

In the present embodiment, the robot RB includes a robot hand H attached to the distal end of its robot arm as an example end effector and holds a workpiece in the box 22 by gripping the workpiece with the robot hand H. The workpiece held is transported to the shelf 24 and then released to be placed in position. The member for holding a workpiece is not limited to the robot hand H and may be a suction pad for attracting a workpiece.

The image sensor S is located above the box 22. The image sensor S captures a still image of a set of workpieces contained in the box 22.

The manipulator controller 10 generates a path from any initial posture of the robot RB to a target posture. The path refers to a list of postures of the robot RB during an operation from the initial posture to the target posture. More specifically, the manipulator controller 10 processes a captured image obtained from the image sensor S and identifies the position and the posture of a workpiece to be held based on the result of the image processing. The manipulator controller 10 then generates first to third paths each including an initial posture and a target posture. In the first path, the initial posture is a retracted posture in which the robot RB has retracted out of the view range of the image sensor S to allow the image sensor S to capture an image of workpieces in the box 22, and the target posture is a holding posture in which the robot RB has held a workpiece in the box 22. In the second path, the initial posture is the holding posture in which the robot RB has held a workpiece in the box 22, and the target posture is a placing posture in which the robot RB has placed the workpiece in the shelf 24. In the third path, the initial posture is the placing posture in which the robot RB has placed a workpiece in the shelf 24, and the target posture is the retracted posture in which the robot RB has retracted out of the view range of the image sensor S to allow the image sensor S to capture an image of workpieces in the box 22. In another embodiment, an image sensor for capturing an image of the shelf 24 may be added and the image captured by the image sensor may be used to identify a position on which a workpiece is placed. The manipulator controller 10 then outputs an operational command value to the robot RB to operate the robot RB in accordance with the generated paths.

The robot RB will now be described. Although a vertical articulated robot is used as an example of the robot RB in the present embodiment, the present embodiment may also use, for example, a horizontal articulated robot (selective compliance assembly robot arm, or SCARA, robot) and a parallel link robot.

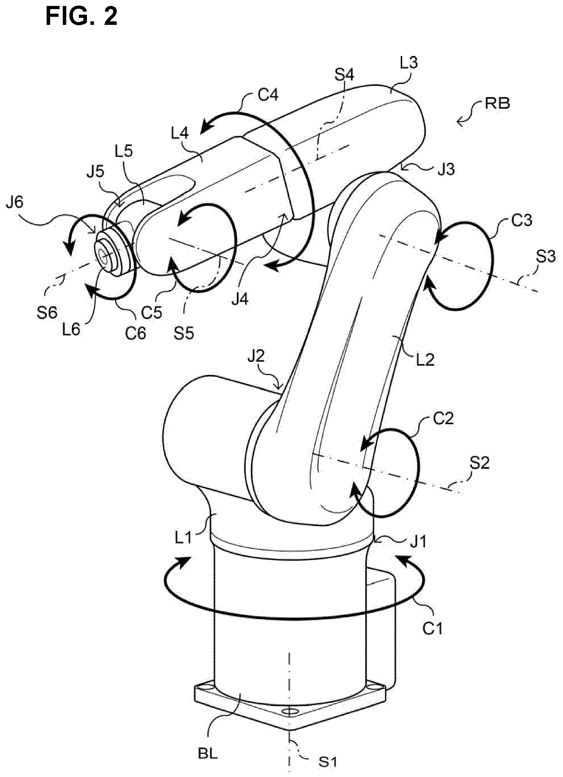

Fig. 2 is a diagram of the robot RB as a vertical articulated robot, showing its structure. As shown in Fig. 2, the robot RB is a six-axis robot with six degrees of freedom. The robot RB includes a base link BL, links L1 to L6, and joints J1 to J6. Each joint connects links together. The links L1 to L6 and the robot hand H connected to the link L6 are herein collectively referred to as a robot arm.

The base link BL and the link L1 are connected to each other with the joint J1, which rotates in the direction indicated by arrow C1 about a vertical axis S1 in Fig. 2. In other words, the link L1 pivots in the direction indicated by arrow C1 on the base link BL.

The links L1 and L2 are connected to each other with the joint J2, which rotates in the direction indicated by arrow C2 about a horizontal axis S2 in Fig. 2. In other words, the link L2 pivots in the direction indicated by arrow C2 on the link L1.

The links L2 and L3 are connected to each other with the joint J3, which rotates in the direction indicated by arrow C3 about an axis S3 in Fig. 2. In other words, the link L3 pivots in the direction indicated by arrow C3 on the link L2.

The links L3 and L4 are connected to each other with the joint J4, which rotates in the direction indicated by arrow C4 about an axis S4 in Fig. 2. In other words, the link L4 pivots in the direction indicated by arrow C4 on the link L3.

The links L4 and L5 are connected to each other with the joint J5, which rotates in the direction indicated by arrow C5 about an axis S5 in Fig. 2. In other words, the link L5 pivots in the direction indicated by arrow C5 on the link L4.

The links L5 and L6 are connected to each other with the joint J6, which rotates in the direction indicated by arrow C6 about an axis S6 in Fig. 2. In other words, the link L6 pivots in the direction indicated by arrow C6 on the link L5. The robot hand H attached to the link L6 is not shown in Fig. 2.

Each of the joints J1 to J6 has a predetermined rotational angle range as its movable range.

The posture of the robot RB is determined by the combination of the rotational angles of the joints J1 to J6. In other words, the operational command value for operating the robot RB is equivalent to the rotational angle of each of the joints J1 to J6 corresponding to a target posture for the robot RB.

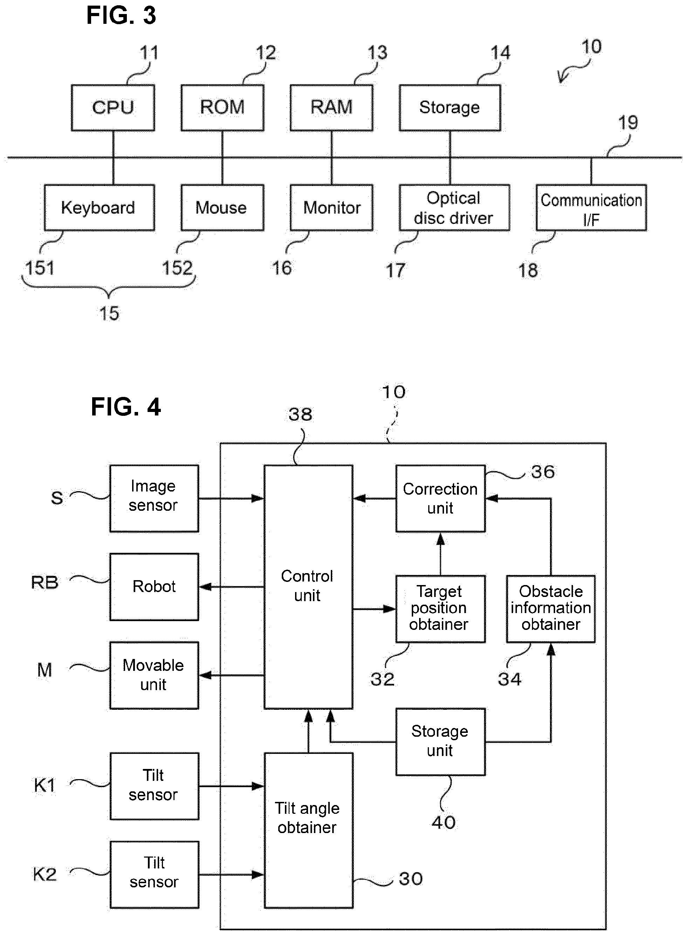

Fig. 3 is a block diagram of the manipulator controller 10 according to the present embodiment showing its hardware configuration.

As shown in Fig. 3, the manipulator controller 10 includes a central processing unit (CPU) 11, a read-only memory (ROM) 12, a random-access memory (RAM) 13, a storage 14, an input unit 15, a monitor 16, an optical disc driver 17, and a communication interface 18. The components are connected to one another with a bus 19 in a communicable manner.

In the present embodiment, the ROM 12 or the storage 14 stores a manipulator control program for performing a manipulator control process. The CPU 11 executes various programs and controls the components. More specifically, the CPU 11 reads a program from the ROM 12 or the storage 14 and executes the program using the RAM 13 as a work area. The CPU 11 controls the components and performs various arithmetic processes in accordance with the programs stored in the ROM 12 or the storage 14.

The ROM 12 stores programs and data. The RAM 13 serves as a work area for temporarily storing programs or data. The storage 14 includes a hard disk drive (HDD) or a solid-state drive (SSD) and stores various programs including an operating system and stores various items of data.

The input unit 15 includes a keyboard 151 and a pointing device such as a mouse 152, and is used for various input operations. The monitor 16 is, for example, a liquid crystal display, and displays various sets of information. The monitor 16 may include a touchscreen display that can also serve as the input unit 15. The optical disc driver 17 reads data stored in recording media, such as compact disc read-only memories (CD-ROMs) and Blu-ray discs, and writes data onto recording media.

The communication interface 18 communicates with other components including the robot RB and the image sensor S, and uses a standard such as Ethernet (registered trademark), Fiber Distributed Data Interface (FDDI), Wi-Fi (registered trademark), a universal serial bus (USB), or IEEE 1394.

The functional components of the manipulator controller 10 will now be described.

Fig. 4 is a functional block diagram of the manipulator controller 10. The manipulator controller 10 includes, as its functional components, a tilt angle obtainer 30, a target position obtainer 32, an obstacle information obtainer 34, a correction unit 36, a control unit 38, and a storage unit 40 as shown in Fig. 4. Each functional component is implemented by the CPU 11 reading the manipulator control program stored in the ROM 12 or the storage 14, expanding the program into the RAM 13, and executing the program.

The tilt angle obtainer 30 obtains the tilt angle of the movable unit M receiving the robot RB relative to a reference surface. The reference surface is, for example, a horizontal plane in the present embodiment.

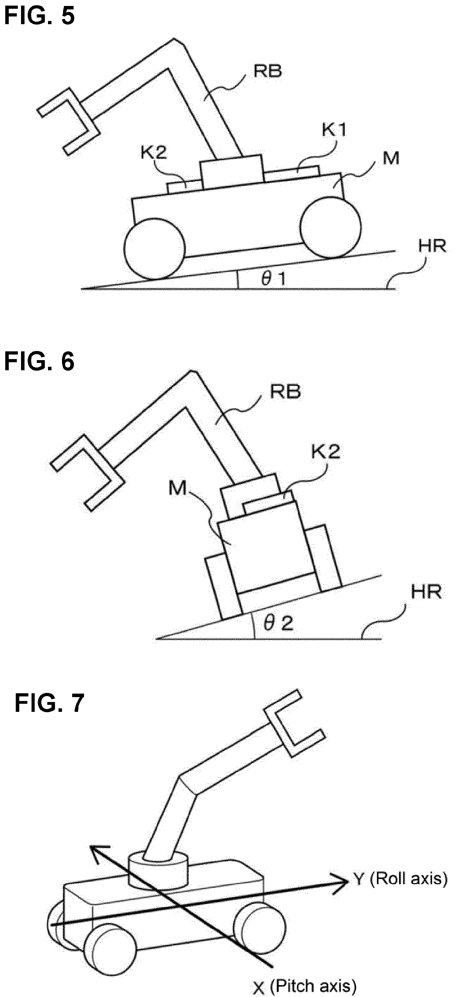

As shown in Figs. 5 and 6, tilt sensors K1 and K2 are mounted on the same surface as the surface of the movable unit M on which the robot RB is installed.

As shown in Fig. 5, the tilt sensor K1 detects a pitch tilt angle $\theta1$ of the movable unit M receiving the robot RB relative to a horizontal plane HR.

The pitch tilt angle $\theta1$ is a tilt angle in the rotation direction about a pitch axis relative to a horizontal plane when the X axis is the pitch axis and the Y axis perpendicular to the X axis is a roll axis as shown in Fig. 7.

As shown in Fig. 6, the tilt sensor K2 detects a roll tilt angle $\theta2$ of the movable unit M receiving the robot RB relative to the horizontal plane HR.

The roll tilt angle $\theta2$ is a tilt angle in the rotation direction about a roll axis relative to a horizontal plane when the X axis is the pitch axis and the Y axis perpendicular to the X axis is the roll axis as shown in Fig. 7.

The tilt angle obtainer 30 obtains the pitch tilt angle $\theta1$ from the tilt sensor K1 and the roll tilt angle $\theta2$ from the tilt sensor K2.

The target position obtainer 32 obtains a target position for the robot RB when the movable unit M has no tilt to the horizontal plane HR.

The obstacle information obtainer 34 obtains obstacle information about the shape and the position of predefined obstacles.

The correction unit 36 corrects the target position to a corrected target position in accordance with the pitch tilt angle $\theta1$ and the roll tilt angle $\theta2$ based on the pitch tilt angle $\theta1$ and the roll tilt angle $\theta2$ obtained by the tilt angle obtainer 30, the target position obtained by the target position obtainer 32, and the obstacle information obtained by the obstacle information obtainer 34.

The control unit 38 controls the operation of the robot RB based on a corrected target posture determined by the correction unit 36 using the current position and the corrected target position for the robot RB.

The storage unit 40 stores various sets of information including the manipulator control program and the obstacle information.

The obstacle information is about the shape and the position of obstacles. The obstacles in the present embodiment include the stand 20, the box 22, and the shelf 24.

The operation of the manipulator controller 10 will now be described. For ease of explanation, the movable unit M is stationary in one place.

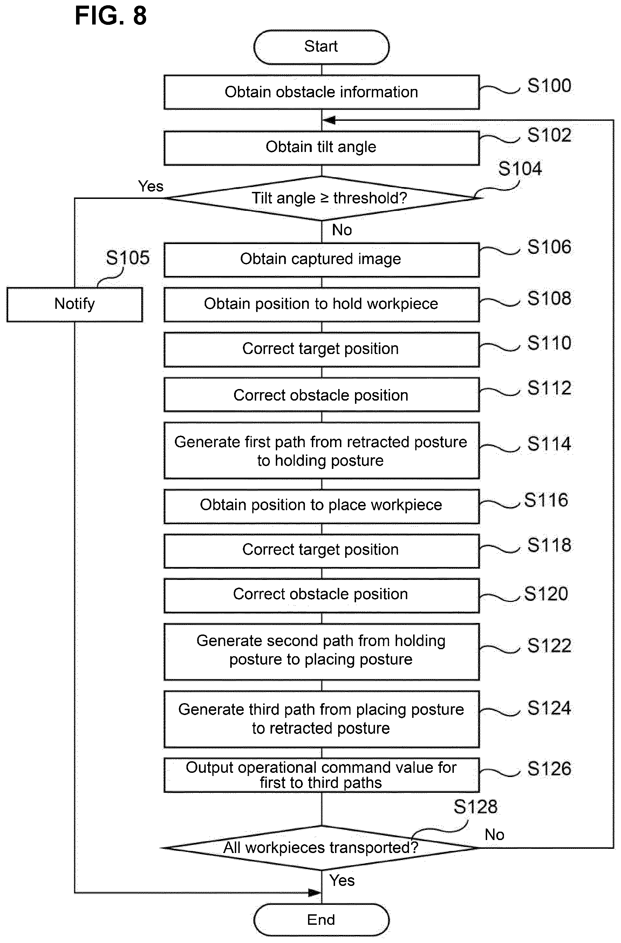

Fig. 8 is a flowchart showing the manipulator control process performed by the CPU 11 in the manipulator controller 10. In response to an instruction from an operator to perform the manipulator control process, the CPU 11 reads the manipulator control program from the ROM 12 or the storage 14, expands the program into the RAM 13, and executes the program to perform the manipulator control process.

The CPU 11, which functions as the obstacle information obtainer 34, reads and obtains the obstacle information from the storage unit 40 (step S100).

The CPU 11, which functions as the tilt angle obtainer 30, obtains the pitch tilt angle $\theta1$ from the tilt sensor K1 and the roll tilt angle $\theta2$ from the tilt sensor K2 (step S102).

The CPU 11, which functions as the control unit 38, determines whether at least either the pitch tilt angle $\theta1$ or the roll tilt angle $\theta2$ is equal to or greater than a predetermined threshold (step S104). The threshold is a predetermined value at and above which the movable manipulator MP may fall down.

When at least either the pitch tilt angle $\theta1$ or the roll tilt angle $\theta2$ is equal to or greater than the predetermined threshold (Yes in step S104), or more specifically when the movable manipulator MP may fall down, the processing advances to step S105.

5

In step S105, the CPU 11, which functions as the control unit 38, notifies that the movable manipulator MP may fall down. More specifically, the CPU 11, for example, displays a warning message indicating that the movable manipulator MP may fall down on the monitor 16. In another embodiment, a buzzer (not shown) may be connected to the manipulator controller 10 and notify, by sound, that the movable manipulator MP may fall down. In another embodiment, a warning light (not shown) may be connected to the manipulator controller 10 and notify, by light, that the movable manipulator MP may fall down.

When both the pitch tilt angle θ1 and the roll tilt angle θ2 are less than the predetermined threshold (No in step S104), or more specifically when the movable manipulator MP will not fall down, the processing advances to step S106.

The CPU 11, which functions as the control unit 38, instructs the image sensor S to capture an image and then obtains the image captured by the image sensor S (step S106).

The CPU 11, which functions as the target position obtainer 32, selects the position of a workpiece to be held using the captured image and then obtains the selected position as a target position for the robot RB when the movable unit M has no tilt to the horizontal plane (step S108).

The workpiece to be held may be, for example, a workpiece at the top in the set of workpieces, a workpiece in the center in the set of workpieces, a workpiece that does not overlap the other workpieces, or a workpiece that is selected based on other criteria.

The CPU 11, which functions as the correction unit 36, corrects the target position to the corrected target position in accordance with the pitch tilt angle θ1 and the roll tilt angle θ2 based on the pitch tilt angle θ1 and the roll tilt angle θ2 obtained in step S102 and the target position obtained in step S108 (step S110).

More specifically, the corrected target position is calculated with the formula below, where the target position obtained in step S108 is (Xg, Yg, Zg) and the corrected target position is (X'g, Y'g, Z'g).

Formula 1

$$\begin{pmatrix} X'_g \\ Y'_g \\ Z'_g \end{pmatrix} = R \begin{pmatrix} X_g \\ Y_g \\ Z_g \end{pmatrix} \tag{1}$$

In the formula, R is the three-dimensional (3D) rotation matrix with the pitch tilt angle θ1 and the roll tilt angle θ2 as the parameters as shown below.

Formula 2

$$R = \begin{pmatrix} \cos\theta2 & 0 & \sin\theta2 \\ \sin\theta1\sin\theta2 & \cos\theta1 & -\sin\theta1\cos\theta2 \\ -\cos\theta1\sin\theta2 & \sin\theta1 & \cos\theta1\cos\theta2 \end{pmatrix} \tag{2}$$

The CPU 11, which functions as the correction unit 36, corrects the position of the obstacle to a corrected obstacle position in accordance with the pitch tilt angle θ1 and the roll tilt angle θ2 based on the obstacle information obtained in step S100 (step S112).

More specifically, the corrected obstacle position is calculated with the formula below, where the position of the box 22 as an obstacle obtained in step S100 is (Xt, Yt, Zt) and the corrected obstacle position is (X't, Y't, Z't).

Formula 3

$$\begin{pmatrix} X'_t \\ Y'_t \\ Z'_t \end{pmatrix} = R \begin{pmatrix} X_t \\ Y_t \\ Z_t \end{pmatrix} \tag{3}$$

The CPU 11, which functions as the control unit 38, generates the first path having the initial posture being the retracted posture in which the robot RB has retracted to the retracted position and the target posture being the holding posture in which the robot RB holds a workpiece inside the box 22 based on the corrected target position calculated in step S110 and the corrected obstacle position calculated in step S112 (step S114). The first path may be generated using a known path planning technique. The same applies to the second and third paths described later.

The CPU 11, which functions as the target position obtainer 32, selects a placement position in the shelf 24 on which the workpiece held is placed, and then sets the selected placement position as a target position for the robot RB when the movable unit M has no tilt to the horizontal plane (step S116).

The placement position in the shelf 24 on which the robot RB places the workpiece may be obtained in the manner described below. For example, a plurality of placement positions in the shelf 24 are taught in advance, and the storage unit 40 stores the position information indicating the plurality of taught placement positions and the order in which workpieces are to be placed on the plurality of placement positions. The robot RB then uses each placement position as a target position in the placement order. An image sensor for capturing an image of the shelf 24 may be added and the placement position on which a workpiece is placed may be selected using the captured image of the shelf 24, in the same manner as when a workpiece to be held is selected.

The CPU 11, which functions as the correction unit 36, corrects the target position to the corrected target position in accordance with the pitch tilt angle $\theta1$ and the roll tilt angle $\theta2$ based on the pitch tilt angle $\theta1$ and the roll tilt angle $\theta2$ obtained in step S102 and the target position obtained in step S116, in the same manner as in step S110 (step S118).

The CPU 11, which functions as the correction unit 36, corrects the position of the shelf 24 as the obstacle to the corrected obstacle position in accordance with the pitch tilt angle $\theta1$ and the roll tilt angle $\theta2$ based on the obstacle information obtained in step S100, in the same manner as in step S112 (step S120).

The CPU 11, which functions as the control unit 38, generates the second path having the initial posture being the holding posture in which the robot RB has held a workpiece inside the box 22 and the target posture being the placing posture at the corrected target position obtained in step S118 based on the corrected target position calculated in step S118 and the corrected obstacle position calculated in step S120 (step S122).

The CPU 11, which functions as the control unit 38, generates the third path from the corrected target posture in which the robot RB has placed the workpiece in the shelf 24 to the retracted posture (step S124).

The CPU 11, which functions as the control unit 38, generates an operational command value for the robot RB based on the first to third paths of the robot RB, and then transmits the operational command value to the robot RB (step S126). This causes the robot RB to move in accordance with the generated first to third paths. More specifically, the robot RB moves from the retracted position, holds a workpiece in the box 22, places the workpiece on the predetermined position in the shelf 24, and then retracts to the retracted position.

The CPU 11, which functions as the control unit 38, determines whether all the workpieces in the box 22 have been transported to the shelf 24 (step S128). More specifically, the CPU 11, for example, obtains a captured image of the inside of the box 22 and performs a known image process such as pattern recognition to determine whether the captured image includes workpieces. In another embodiment, when the number of workpieces initially placed in the box 22 can be determined in advance, the CPU 11 may determine whether the number of operations to transport a workpiece has reached the number of workpieces initially placed in the box 22. When all the workpieces have been transported (Yes in step S128), the routine ends. When at least one workpiece remains untransported (No in step S128), the processing advances to step S102 and repeats steps S102 to S120 until all the workpieces are transported.

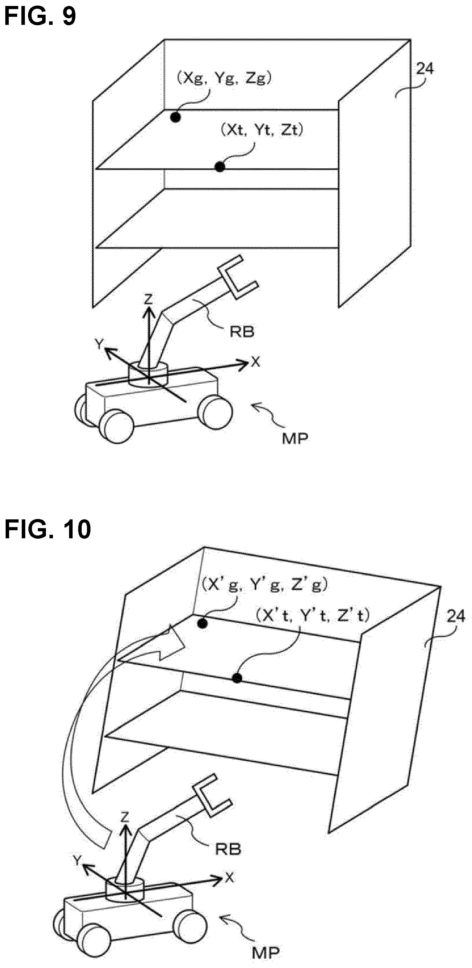

As described above, the target position for the robot RB and the obstacle position are corrected and then used to control the operation of the robot RB in the present embodiment. This reduces operational errors when the movable unit M tilts relative to the horizontal plane. In an example operation to place a workpiece in the shelf 24 when the movable unit M has no tilt to the horizontal plane shown in Fig. 9, the target position for the robot RB is (Xg, Yg, Zg) and the reference point of the shelf 24 as an obstacle is the obstacle position (Xt, Yt, Zt). In this example, the target position is corrected by the processing in step S118 and the position of the shelf 24 as an obstacle is corrected by the processing in step S120 to maintain the relative relationship between the corrected target position (X'g, Y'g, Z'g) and the corrected obstacle position (X't, Y't, Z't) equal to the relative relationship between the target position (Xg, Yg, Zg) and the obstacle position (Xt, Yt, Zt) before the correction as shown in Fig. 10. This reduces operational errors, such as collisions between the robot arm of the robot RB and the shelf 24 when the workpiece is to be placed in the shelf 24.

Although the robot RB is installed on the movable unit M in the present embodiment, the present invention may apply to a robot RB that is installed on a stationary base.

Although the CPU reads software (program) to perform path planning in the above embodiments, such path planning may be performed by processors other than the CPU. Such processors include field-programmable gate arrays (FPGAs) and other programmable logic devices (PLDs) that are reconfigurable after being manufactured, and dedicated electric circuits with circuit configurations specially designed to perform specific processing, such as application-specific integrated circuits (ASICs). The path planning may be performed by one of such processors or a combination of two or more processors of the same type or different types (for example, a plurality of FPGAs or a combination of a CPU and an FPGA). More specifically, the processors include, as their hardware components, electric circuits combining circuit elements such as semiconductor devices.

Although the manipulator control program is prestored (preinstalled) in the storage 14 or the ROM 12 in the above embodiments, the storage device is not limited to such examples. The program may be stored in a recording medium such as a compact disc read-only memory (CD-ROM), a digital versatile disc read-only memory (DVD-ROM), or a universal serial bus (USB) memory device. The program may be downloaded from an external device through a network.

REFERENCE SIGNS LIST

1     pick and place machine

10     manipulator controller
22     box
24     shelf
30     tilt angle obtainer
32     target position obtainer
34     obstacle information obtainer
36     correction unit
38     control unit
40     storage unit

**Claims**

**1.**   A manipulator controller (10), comprising:

a tilt angle obtainer (30) configured to obtain a tilt angle of a base (M) relative to a reference surface, the base (M) receiving a manipulator (RB);
a target position obtainer (32) configured to obtain a target position of the manipulator (RB) on the base (M), in a state in which the base (M) is not tilted relative to the reference surface;
a correction unit (36) configured to correct, based on the tilt angle obtained by the tilt angle obtainer (30) and the target position obtained by the target position obtainer (32), the target position to a corrected target position in accordance with the tilt angle;
an obstacle information obtainer (34) configured to obtain predetermined obstacle information about a shape and a position of an obstacle;
wherein the correction unit (36) is configured to correct, based on the tilt angle obtained by the tilt angle obtainer (30) and the position of the obstacle obtained by the obstacle information obtainer (32), the position of the obstacle to a corrected obstacle position in accordance with the tilt angle; and
a control unit (38) configured to control an operation of the manipulator (RB) based on the corrected target position and the corrected obstacle position.

**2.**   The manipulator controller (10) according to claim 1, wherein
the control unit (38) outputs a notification in response to the tilt angle equal to or greater than a predetermined value.

**3.**   A manipulator control method implementable by a computer, the method comprising:

obtaining a tilt angle of a base (M) relative to a reference surface, the base (M) receiving a manipulator (RB);
obtaining a target position of the manipulator (RB) having no tilt to the reference surface;
correcting, based on the obtained tilt angle and the obtained target position, the target position to a corrected target position in accordance with the tile angle;
obtaining predetermined obstacle information about a shape and a position of an obstacle;
correcting, based on the obtained tilt angle and the obtained position of the obstacle, the position of the obstacle to a corrected obstacle position in accordance with the tilt angle; and
controlling an operation of the manipulator (RB) based on the corrected target position and the corrected obstacle position.

**4.**   A manipulator control program comprising instructions which, when the program is executed by a computer, cause the computer to carry out the method of claim 3.

**Patentansprüche**

1. Manipulatorsteuerung (10), aufweisend:

   eine Neigungswinkelerlangungseinrichtung (30), die eingerichtet ist, einen Neigungswinkel einer Basis (M) relativ zu einer Referenzfläche zu erlangen, wobei die Basis (M) einen Manipulator (RB) aufnimmt;
   eine Zielpositionserlangungseinrichtung (32), die eingerichtet ist, eine Zielposition des Manipulators (RB) auf der Basis (M) in einem Zustand zu erlangen, in dem die Basis (M) relativ zu der Referenzfläche nicht geneigt ist;
   eine Korrektureinheit (36), die eingerichtet ist, basierend auf dem Neigungswinkel, der durch die Neigungswinkelerlangungseinrichtung (30) erlangt wird, und der Zielposition, die durch die Zielpositionserlangungseinrichtung (32) erlangt wird, die Zielposition gemäß dem Neigungswinkel auf eine korrigierte Zielposition zu korrigieren;
   eine Hindernisinformationserlangungseinrichtung (34), die eingerichtet ist, vorbestimmte Hindernisinformationen über eine Form und eine Position eines Hindernisses zu erlangen;
   wobei die Korrektureinheit (36) eingerichtet ist, basierend auf dem Neigungswinkel, der durch die Neigungswinkelerlangungseinrichtung (30) erlangt wird, und der Position des Hindernisses, die durch die Hindernisinformationserlangungseinrichtung (32) erlangt wird, die Position des Hindernisses gemäß dem Neigungswinkel auf eine korrigierte Hindernisposition zu korrigieren; und
   eine Steuereinheit (38), die eingerichtet ist, einen Betrieb des Manipulators (RB) basierend auf der korrigierten Zielposition und der korrigierten Hindernisposition zu steuern.

2. Manipulatorsteuerung (10) nach Anspruch 1, wobei
   die Steuereinheit (38) eine Benachrichtigung als Reaktion darauf ausgibt, dass der Neigungswinkel gleich oder größer als ein vorbestimmter Wert ist.

3. Manipulatorsteuerverfahren, das durch einen Computer implementierbar ist, wobei das Verfahren Folgendes aufweist:

   Erlangen eines Neigungswinkels einer Basis (M) relativ zu einer Referenzfläche, wobei die Basis (M) einen Manipulator (RB) aufnimmt;
   Erlangen einer Zielposition des Manipulators (RB), die keine Neigung zu der Referenzfläche aufweist;
   Korrigieren, basierend auf dem erlangten Neigungswinkel und der erlangten Zielposition, der Zielposition gemäß dem Neigungswinkel auf eine korrigierte Zielposition;
   Erlangen vorbestimmter Hindernisinformationen über eine Form und eine Position eines Hindernisses;
   Korrigieren, basierend auf dem erlangten Neigungswinkel und der erlangten Position des Hindernisses, der Position des Hindernisses gemäß dem Neigungswinkel auf eine korrigierte Hindernisposition; und
   Steuern eines Betriebs des Manipulators (RB) basierend auf der korrigierten Zielposition und der korrigierten Hindernisposition.

4. Manipulatorsteuerprogramm, das Anweisungen aufweist, die, wenn das Programm durch einen Computer ausgeführt wird, den Computer veranlassen, das Verfahren nach Anspruch 3 auszuführen.

**Revendications**

1. Dispositif de commande de manipulateur (10), comprenant :

   un dispositif d'obtention d'angle d'inclinaison (30) configuré pour obtenir un angle d'inclinaison d'une base (M) par rapport à une surface de référence, la base (M) recevant un manipulateur (RB) ;
   un dispositif d'obtention de position cible (32) configuré pour obtenir une position cible du manipulateur (RB) sur la base (M), dans un état dans lequel la base (M) n'est pas inclinée par rapport à la surface de référence ;
   une unité de correction (36) configurée pour corriger, sur la base de l'angle d'inclinaison obtenu par le dispositif d'obtention d'angle d'inclinaison (30) et de la position cible obtenue par le dispositif d'obtention de position cible (32), la position cible en une position cible corrigée conformément à l'angle d'inclinaison ;
   un dispositif d'obtention d'informations d'obstacle (34) configuré pour obtenir des informations d'obstacle prédéterminées concernant une forme et une position d'un obstacle ;

dans lequel l'unité de correction (36) est configurée pour corriger, sur la base de l'angle d'inclinaison obtenu par le dispositif d'obtention d'angle d'inclinaison (30) et de la position de l'obstacle obtenue par le dispositif d'obtention d'informations d'obstacle (32), la position de l'obstacle en une position d'obstacle corrigée conformément à l'angle d'inclinaison ; et

une unité de commande (38) configurée pour commander une opération du manipulateur (RB) sur la base de la position cible corrigée et de la position d'obstacle corrigée.

2. Dispositif de commande de manipulateur (10) selon la revendication 1, dans lequel

l'unité de commande (38) délivre en sortie une notification en réponse à l'angle d'inclinaison égal ou supérieur à une valeur prédéterminée.

3. Procédé de commande de manipulateur pouvant être mis en œuvre par un ordinateur, le procédé comprenant :

l'obtention d'un angle d'inclinaison d'une base (M) par rapport à une surface de référence, la base (M) recevant un manipulateur (RB) ;

l'obtention d'une position cible du manipulateur (RB) n'ayant pas d'inclinaison par rapport à la surface de référence ;

la correction, sur la base de l'angle d'inclinaison obtenu et de la position cible obtenue, de la position cible en une position cible corrigée conformément à l'angle d'inclinaison ;

l'obtention d'informations d'obstacle prédéterminées concernant une forme et une position d'un obstacle ;

la correction, sur la base de l'angle d'inclinaison obtenu et de la position obtenue de l'obstacle, de la position de l'obstacle en une position d'obstacle corrigée conformément à l'angle d'inclinaison ; et

la commande d'une opération du manipulateur (RB) sur la base de la position cible corrigée et de la position d'obstacle corrigée.

4. Programme de commande de manipulateur comprenant des instructions qui, lorsque le programme est exécuté par un ordinateur, amènent l'ordinateur à mettre en œuvre le procédé selon la revendication 3.

**FIG. 1**

# FIG. 2

# FIG. 3

11 CPU

12 ROM

13 RAM

14 Storage

10

19

Keyboard

Mouse

Monitor

Optical disc driver

Communication I/F

151

152

16

17

18

15

# FIG. 4

10

38

36 Correction unit

S — Image sensor

RB — Robot

Control unit

Target position obtainer

Obstacle information obtainer

M — Movable unit

32

34

Storage unit

K1 — Tilt sensor

Tilt angle obtainer

40

K2 — Tilt sensor

30

13

## FIG. 5

## FIG. 6

## FIG. 7

# FIG. 8

Start

Obtain obstacle information — S100

Obtain tilt angle — S102

Tilt angle ≥ threshold? — S104

Yes

No

Obtain captured image — S106

S105 Notify

Obtain position to hold workpiece — S108

Correct target position — S110

Correct obstacle position — S112

Generate first path from retracted posture to holding posture — S114

Obtain position to place workpiece — S116

Correct target position — S118

Correct obstacle position — S120

Generate second path from holding posture to placing posture — S122

Generate third path from placing posture to retracted posture — S124

Output operational command value for first to third paths — S126

All workpieces transported? — S128

No

Yes

End

## FIG. 9

$(Xg, Yg, Zg)$
$(Xt, Yt, Zt)$
24
RB
Z
Y
X
MP

## FIG. 10

$(X'g, Y'g, Z'g)$
$(X't, Y't, Z't)$
24
RB
Z
Y
X
MP

**EP 3 822 045 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018005709 A
- JP 2013101593 A
- US 2015113820 A1
- US 2016059411 A1
- US 2015035969 A1